Europäisches Patentamt

European Patent Office

Office européen des brevets

(11) Veröffentlichungsnummer: **0 090 172**
**A1**

## (12) EUROPÄISCHE PATENTANMELDUNG

(21) Anmeldenummer: 83101613.4

(22) Anmeldetag: 19.02.83

(51) Int. Cl.³: **A 21 D 2/36**

(30) Priorität: 26.03.82 CH 1876/82

(43) Veröffentlichungstag der Anmeldung: 05.10.83
Patentblatt 83/40

(84) Benannte Vertragsstaaten: **AT BE CH DE FR GB IT LI LU NL SE**

(71) Anmelder: **Brauerei A. Hürlimann AG,
Brandschenkestr. 150, CH-8002 Zürich (CH)**

(72) Erfinder: **Länzlinger, Urs, Etzelstrasse 43,
CH-8840 Einsiedeln (CH)**
Erfinder: **Steiner, Karl, Leimbachstrasse 215,
CH-8041 Zürich (CH)**
Erfinder: **Hürlimann, Martin, Brunaustrasse 16,
CH-8002 Zürich (CH)**

(74) Vertreter: **Troesch, Hans Alfred, Dr. Ing. et al,
Walchestrasse 19, CH-8035 Zürich (CH)**

(54) Gebäck, insbesondere zum Konsumieren mit Bier und Verfahren zu dessen Herstellung.

㉗ Die sogenannten Ballaststoffe, wie Zellulose, Hemizellulose und Lignin, spielen im Zusammenhang mit der menschlichen Ernährung insofern eine wichtige Rolle, als sie die Darmperistaltik anregen, wodurch ein träger Stuhlgang (Obstipation) mit seinen Folgeerscheinungen in der Regel vermieden wird. Diesen Vorteil hat ein Gebäck, das Malztreber enthält und als Fladen oder Brezel ausgebildet ist. Eine solche Brezel setzt sich zusammen aus einer Anzahl folgender Stoffe: Mehl, Weißmehl, Margarine, Bierhefe, Wasser, Salz, Zutaten, z.B. Knoblauch, Zwiebeln, Käse, Glarner Ziger, Curry, Paprika, Kümmel. Zum Herstellen dieser Brezel kocht man mindestens Hefe in Margarine und kocht anschließend unter Beigabe von mindestens Treber und Wasser weiter. Dann kühlt das Ganze ab, und man setzt hierauf Mehl zu, durchknetet den Teig und läßt ihn bei Kühlschranktemperatur einige Stunden stehen. Hierauf verarbeitet man ihn entweder zu Brezeln oder lagert ihn bis zur Verarbeitung bei Tiefkühltemperatur.

ACTORUM AG

- 1 -

## Gebäck, insbesondere zum Konsumieren mit Bier und Verfahren zu dessen Herstellung

Die vorliegende Erfindung betrifft ein Gebäck, insbesondere zum Konsumieren mit Bier sowie ein Verfahren zu dessen Herstellung.

Bisher ass man zum Bier Nüsschen, Pommes-Chips und ähnliches und dies zwar mit Genuss, aber schlechtem Gewissen, weil es zusätzliche Kalorien brachte.

Wie angenehm wäre es, wenn zum Bier etwas konsumiert werden könnte, welches weniger Kalorien und stattdessen mehr Ballaststoffe enthält.

Ein derartiges Gebäck gemäss der Erfindung ist dadurch gekennzeichnet, dass es Malztreber enthält und als süssstofffreie Brezel ausgebildet ist.

Das Verfahren zum Herstellen dieses Gebäcks zeichnet sich dadurch aus, dass man mindestens Hefe in Margarine kocht und anschliessend unter Beigabe von mindestens Treber und Wasser weiterkocht, dann das Ganze abkühlt, hierauf Mehl zusetzt, den Teig durchknetet, den Teig bei Kühlschranktemperatur einige Stunden stehen lässt, um ihn entweder zu Gebäck, insbesondere Brezeln zu verarbeiten oder ihn bis zur Verarbeitung bei Tiefkühltemperatur zu lagern.

In der Folge wird ein Ausführungsbeispiel beschrieben, welches ermöglicht, ein derartiges Gebäck herzustellen.

- 2 -

0090172

<u>Beispiel</u>

Als Ausgangsmaterialien dienen, angegeben in Gew.%:

| | | |
|---|---|---|
| Weissmehl | 31 | % |
| Malztreber | 16 | % |
| Käse oder Zwiebeln | 15,5 | % |
| Margarine | 15 | % |
| Bierhefe | 8 | % |
| Wasser | 12 | % |
| Salz | 1,5 | % |
| Gewürze | 1 | % |

Diese Stoffe werden nach folgendem Rezept verarbeitet: Die Margarine wird erhitzt, und zwar bis zur Siedetemperatur oder etwas darunter. Unter Rühren wird Hefe beigegeben sowie diverse Geschmackszutaten, Gewürze und Salz. Bei leichtem Kochen wird etwa 10 min gut umgerührt. Anschliessend werden der Treber und das Wasser wiederum unter Rühren beigegeben und das Ganze auf kleinem Feuer etwa 15 min kochen gelassen. Anschliessend erfolgt eine Abkühlung auf ca. $30^{\circ}$C und Zugabe des Mehls. Der entstehende Teig wird gut durchgeknetet und dieser danach bei Kühlschranktemperatur, d.h. ca. $5^{\circ}$C, mindestens 12 Stunden stehen gelassen. Nun kann der Teig zu Brezeln verarbeitet oder im Tiefkühlhaus bis zur Verarbeitung gelagert werden.

Es ist festzuhalten, dass man durch die Zugabe von Hefe in diese heisse Margarine eine würzige Mischung erhält. Wichtig ist, dass man auch den Treber der heissen Margarine/Hefemischung zusetzt, ebenso wie die Geschmackszutaten, wie Käse und Zwiebeln sowie Gewürze u. dgl. Dies ist äusserst wichtig, ansonst die entstehenden Brezeln einen bitteren Nachgeschmack erhalten, welcher äusserst unangenehm wirkt.

Unterschiedliche Geschmacksvarianten ergeben sich mit folgenden Zutaten:

> Knoblauch
> Zwiebeln
> Käse, diverse Sorten
> Glarner Ziger
> Curry
> Paprika
> Kümmel
> diverse andere Gewürze

Durch die Verwendung von Malztreber, der einen hohen Ballaststoffanteil aufweist wird die Verdauung gefördert, während die Verwendung von Bierhefe als Geschmacksverstärker wirkt, welcher ausser Vitamine auch Eiweiss enthält.

Herkömmliche Brezeln werden auch in Margarine hergestellt, wobei diese jedoch nur geschmolzen und leicht erwärmt wird. Anschliessend werden die übrigen Beigaben für dieses Süssgebäck beigemischt.

Zum Treber als Ballaststoff ist ferner zu bemerken, dass er in der menschlichen Nahrung sehr gesucht ist, da diese Stoffe nicht nur das Hungergefühl stillen, ohne Fett anzusetzen, sondern Stoffe sind, die der Mensch nicht verdauen kann. Ballaststoffhaltige Nahrungsmittel sind deshalb sehr erwünscht.

Was die im Beispiel angegebenen prozentualen Zusammensetzungen betrifft, so ist die im folgenden angegebene Variante ebenfalls verwendbar:

| | |
|---|---|
| Weissmehl | 36 % |
| Malztreber | 18 % |
| Margarine | 18 % |
| Bierhefe | 10 % |
| Wasser | 14 % |
| Salz | 2 % |
| Zutaten (je nach Typ) | 2 % |

Versuche haben gezeigt, dass der maximale Treberanteil, der möglich ist, ca. 35 Gew.% beträgt und der maximale Bierhefenanteil 25 Gew.%.

Auf diese Weise hergestellte Brezeln sind äusserst geschmacksvoll und sehr angenehm zu konsumieren, insbesondere mit Bier.

Der Treber ist vorzugsweise unbehandelt, insbesondere ungemahlen.

Patentansprüche:

1.  Gebäck, insbesondere zum Konsumieren mit Bier, dadurch gekennzeichnet, dass es Malztreber enthält und als süssstofffreie Brezel ausgebildet ist.

2.  Gebäck, vorzugsweise nach mindestens einem der Ansprüche, dadurch gekennzeichnet, dass es mehrere der folgenden Stoffe enthält: Mehl, Weissmehl, Margarine, Bierhefe, Wasser, Salz, Zutaten, z.B. Knoblauch, Zwiebeln, Käse, Glarner Ziger, und Gewürze, z.B. Curry, Paprika, Kümmel.

3.  Gebäck, vorzugsweise nach mindestens einem der Ansprüche, gekennzeichnet durch einen Trebergewichtsanteil von höchstens 45 Gew.%.

4.  Gebäck, vorzugsweise nach mindestens einem der Ansprüche, gekennzeichnet durch einen Hefe-, vorzugsweise Bierhefeanteil von höchstens 36 Gew.%.

5.  Gebäck, vorzugsweise nach mindestens einem der Ansprüche, gekennzeichnet durch ungefähr folgende Gew.%ige Zusammensetzung:

| Mehl | 42 | oder | Weissmehl | 35,4 |
|------|------|------|-----------|------|
| Treber | 21 | | Malztreber | 18,3 |
| Margarine | 21 | | Käse oder Zwiebeln | 17,5 |
| Hefe | 11,5 | | Margarine | 17 |
| Salz | 2,25 | | Bierhefe | 9 |
| Zutaten | 2,25 | | Salz | 1,7 |
| | | | Gewürze | 1,1 |

6. Verfahren zum Herstellen von Gebäck, dadurch gekennzeichnet, dass man mindestens Hefe in Margarine kocht und anschliessend unter Beigabe von mindestens Treber und Wasser weiterkocht, dann das Ganze abkühlt, hierauf Mehl zusetzt, den Teig durchknetet, den Teig bei Kühlschranktemperatur einige Stunden stehen lässt, um ihn entweder zu Gebäck, insbesondere Brezeln zu verarbeiten oder ihn bis zur Verarbeitung bei Tiefkühltemperatur zu lagern.

7. Verfahren, vorzugsweise nach mindestens einem der Ansprüche, dadurch gekennzeichnet, dass man die folgenden Stoffe in ungefährer Gewichtszusammensetzung verarbeitet:

| | | | oder: | |
|---|---|---|---|---|
| Weissmehl | 31 % | | Weissmehl | 36 % |
| Malztreber | 16 % | | Malztreber | 18 % |
| Kaese oder Zwiebeln | 15,5 % | | Margarine | 18 % |
| Margarine | 15 % | | Bierhefe | 10 % |
| Bierhefe | 8 % | | Wasser | 14 % |
| Wasser | 12 % | | Salz | 2 % |
| Salz | 1,5 % | | Zutaten | 2 % |
| Gewürze | 1 % | | (je nach Typ) | |

8. Verfahren, vorzugsweise nach mindestens einem der Ansprüche, dadurch gekennzeichnet, dass man den Teig zu Brezeln verarbeitet.

9. Verfahren, vorzugsweise nach mindestens einem der Ansprüche, dadurch gekennzeichnet, dass man Margarine bis ungefähr zum Siedepunkt erhitzt, dann unter Rühren

0090172

Hefe beigibt sowie Geschmackszutaten und Salz, das Ganze ca. 10 min umrührend leicht kochen lässt, dann Treber und Wasser unter Umrühren zusetzt und ca. 15 min auf kleinem Feuer kochend hält, auf ca. 30$^{\circ}$C abkühlen lässt, Mehl dazugibt und gut durchknetet, den Teig bei einigen $^{\circ}$C, z.B. 5$^{\circ}$C mindestens 10, vorzugsweise mindestens 12 Stunden stehen lässt, bevor der Teig verarbeitet oder im Tiefkühler aufbewahrt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | JOURNAL OF FOOD SCIENCE, Band 47, Nr. 2, März/April 1982, Seiten 684-685, Chicago, Illinois, USA CHO C. TSEN et al.: "Evaluation of the quality of cookies supplemented with distillers' dried grain flours" * Seite 684, Tabelle 1 * | 1-4 | A 21 D 2/36 |
| | --- | | |
| X | CEREAL CHEMISTRY, Band 55, September/Oktober 1980, Seiten 712-721, USA N. PRENTICE et al.: "High-fiber cookies containing brewers' spent grain" * Seite 714 * | 1-4 | |
| | --- | | |
| X | BAKERS DIGEST, Band 52, Nr. 5, Oktober 1978, Seiten 22,23,35, USA N. PRENTICE et al.: "Brewers' spent grain in high fiber muffins" * Tabellen I,IV * | 1-4 | RECHERCHIERTE SACHGEBIETE (Int. Cl. ³) A 21 D C 12 F |
| | --- | | |
| A | FR-A- 883 827 (M. HOLDERER) 20. Juli 1943 | 1-4 | |
| | ----- | | |

Der vorliegende Recherchenbericht wurde für alle Patentansprüche erstellt.

| Recherchenort DEN HAAG | Abschlußdatum der Recherche 19-05-1983 | Prüfer COUCKE A.O.M. |
|---|---|---|